# EUROPEAN PATENT SPECIFICATION

(11) **EP 3 016 364 B1**
(45) Date of publication and mention of the grant of the patent: **15.08.2018**
(21) Application number: 14306705.6
(22) Date of filing: 27.10.2014
(51) Int. Cl.: H04L 12/14

(54) **DURATION BASED ROUTING**
DAUERBASIERTES ROUTING
ROUTAGE BASÉ SUR LA DURÉE

(43) Date of publication of application: 04.05.2016
(73) Proprietor: Alcatel Lucent, 91620 Nozay (FR)
(72) Inventor: Le Razavet, Olivier, 22304 Lannion (FR)
(74) Representative: Mouney, Jérôme

(56) References cited:
- EP-A1- 1 617 621
- EP-A1- 1 871 042
- WO-A1-2009/086939
- WO-A1-2011/100238
- WO-A2-98/32288
- US-A- 6 052 449

## Description

### FIELD OF THE INVENTION

The present invention pertains to the management of call routing in telecommunication networks. More especially, the present invention relates to an enhanced call server for call routing in a telecommunication network based on the IMS (Internet protocol Multimedia Subsystem) architecture.

### BACKGROUND

IMS architecture is based on Internet standards which are currently the major way to deliver services on new networks. It uses the Session Initiation Protocol (SIP) for establishing, managing and terminating sessions. The overall IMS architecture uses a number of components to enable multimedia based sessions between two or more end devices.

Existing call routing solutions can rely on the usage on a 'carrier pre-selection' based on the time of the day that allows the user to select the best operator network. Unfortunately different operator networks can have various tariffs depending on the duration and therefore the user cannot select the best tariff for a specific call.

The user can select the best carrier at each call setup by dialing the carrier in the protocol but unfortunately this user is not informed in real time about the tariff and therefore it is difficult to make the good choice of carrier for a long call.

Currently, there is no solution to select an operator to provide the best tariff for specific call duration. Another example of related prior art is EP1871042.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for routing a communication associated with a communication device within a telecommunications network, comprising the following steps in an application server included within the telecommunications network:
receiving a message from the communication device, the message comprising a type of communication and an expected duration of communication,
identifying an operator offering the lowest tariff from a carrier pre-selection for said type of communication, depending on said expected duration of communication,
sending another message comprising an identifier of the identified operator to a call server in order to route the communication associated with the communication device toward the network of the identified operator.

Advantageously, the invention offers an additional feature to the telecommunication network, providing enhancement of the routing procedure at IMS network in order to allow the user to select the best offer that operators can provide.

Such enhancement could be exploited for instance by banks or call between PBX servers that exchange information between countries sometimes during hours. Then people acting at management level for enterprise for instance can allocate specific charging scheme that are later on used by each user belonging to the enterprise. The user needs only to indicate how long will be the session when a number is dialed.

In an embodiment, the carrier pre-selection distinguishes different operators offering different tariffs depending on different communication duration slices.

In an embodiment, the carrier pre-selection is updated regularly depending on the time of the day.

In an embodiment, the application server terminates the communication if the duration of the communication exceeds the expected duration of communication.

In an embodiment, the expected duration of communication is provided by the user of the communication device.

In an embodiment, the expected duration of communication is predefined by an administrator managing a set of communication devices.

In an embodiment, the telecommunication network is based on the IMS architecture and said message and said another message are SIP messages.

The invention relates also to an application server for routing a communication associated with a communication device within a telecommunications network, the application server being configured to:
receive a message from the communication device, the message comprising a type of communication and an expected duration of communication,
identify an operator offering the lowest tariff from a carrier pre-selection for said type of communication, depending on said expected duration of communication,
send another message comprising an identifier of the identified operator to a call server in order to route the communication associated with the communication device toward the network of the identified operator.

The invention also pertains to a computer program capable of being implemented within a server, said program comprising instructions which, when the program is executed within said server, carry out steps according to the inventive method.

The present invention and the benefits thereof shall be better understood upon examining the description below, which makes reference to the attached figures, in which:
- FIG. 1 is a schematic block diagram of a communication system according to one embodiment of the invention for the management of duration based call routing; and
- FIG. 2 is an algorithm of a method for the management of duration based call routing according to one embodiment of the invention.

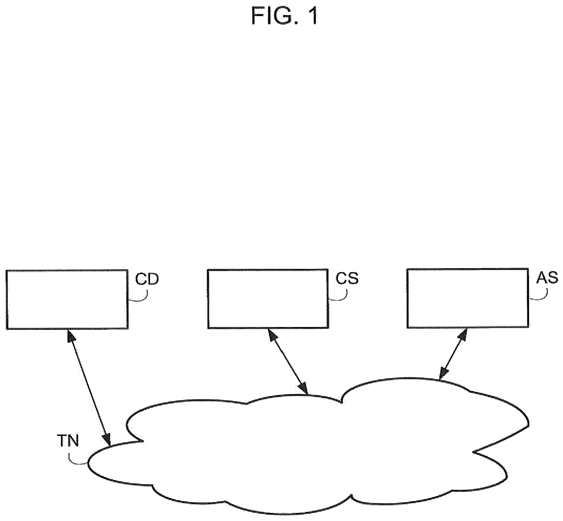

With reference to FIG. 1, a communication system according to the invention comprises a telecommunications network TN, a communication device CD, a call server CS and an application server AS.

The telecommunication network TN may be a wired or wireless network, or a combination of wired and wireless networks.

According to one embodiment of the invention that will be referred to throughout the remainder of the description, the telecommunication network TN is a packet network connected to an IP Multimedia Subsystem (IMS) network.

It is assumed that the user terminal is capable of communicating through the telecommunications network TN connected to the IMS network, for example with another terminal, using communication compliant with the Session Initiation Protocol (SIP). For example, the communication corresponds to an exchange of multimedia flows regarding audio and/or video content, or instant messages. The communication established by the user terminal may also be a communication with a service server, such as a web server or multimedia content server.

The user's profile, containing the services to which that user has subscribed, is saved in a Home Subscriber Server (HSS) server that manages a database particularly containing users' identities, registration information, access parameters, and information needed to invoke the services that the users have subscribed to. In one implementation, the HSS server interacts with other entities of the IMS network using the Diameter protocol.

The communication device CD is capable of establishing a communication within a telecommunications network TN, for example with another user terminal or a server. A communication device CD may, for instance, be a landline or mobile telephone, an electronic telecommunication device or object that is personal to the user and which may be a personal digital assistant (PDA) or a smartphone, capable of being connected to an access terminal of a public wireless local area network (WLAN), or a wireless local area network that complies with one of the 802.1x standards, or a medium-range network using the Worldwide Interoperability for Microwave Access (WiMAX) protocol.

The control of a communication initiated by the terminal is performed within the IMS network, particularly by three Call State Control Function (CSCF) control entities: the entities Proxy CSCF (P-CSCF), Interrogating CSCF (I-CSCF), and Serving-CSCF (S-CSCF).

The entity P-CSCF is the first point of contact in the IMS network, and its address is discovered by the user terminal when a Packet Data Protocol (PDP) context is activated to exchange SIP messages.

The entity I-CSCF communicates with the entity P-CSCF and with the HSS server to assign the entity S-CSCF to the user based on the user's profile saved in the HSS server.

The entity S-CSCF is in charge of controlling the communication session established by the user terminal and invoking the services to which the user is subscribed.

For example, the call server CS can implement an Interconnect Border Control Function (IBCF), a Media Gateway Controller Function (MGCF) that is a SIP endpoint that enables an IMS network to communicate with classic circuit switched networks and modern packet switched networks through a Media Gateway (MGW).

In another example, the call server CS implements the functions of the P-CSCF, the S-CSCF and the I-CSCF.

The call server CS has the functionality to route a communication, based on the type of the call and other parameters of the communication.

The application server AS is connected to the call server CS and collaborates with platforms of different operators.

In one embodiment, the application server is included in the call server.

The application server AS checks available supplementary services as function of the type of call, the time of the day and an expected duration of the communication.

The application server AS stores an application checking available supplementary services for a given subscriber, such as a carrier pre-selection indicating services offered by different operators and tariffs associated with.

The carrier pre-selection comprises tariffs associated with communication duration for each operator.

For instance, the carrier pre-selection can be defined in the following table for a communication duration T at a given time of the day for a given type of communication:

| Communication duration | Operator 1 | Operator 2 | Operator 3 |
|---|---|---|---|
| T < 10 mn | Tariff 1.1 | Tariff 2.1 | Tariff 3.1 |
| 10 mn <T <20mn | Tariff 1.2 | Tariff 2.2 | Tariff 3.2 |
| 20mn <T <1h | Tariff 1.3 | Tariff 2.3 | Tariff 3.2 |
| T > 1h | Tariff 1.4 | Tariff 2.4 | Tariff 3.4 |

Each operator offers different tariffs depending on the communication duration and it is assumed the offered tariff applies for the whole communication duration. For a given communication duration slice, at least one operator offers a best tariff, which means the lowest tariff. For each given communication duration slice, there can be a different operator that offers the best tariff.

The carrier pre-selection can be updated regularly depending on the time of the day.

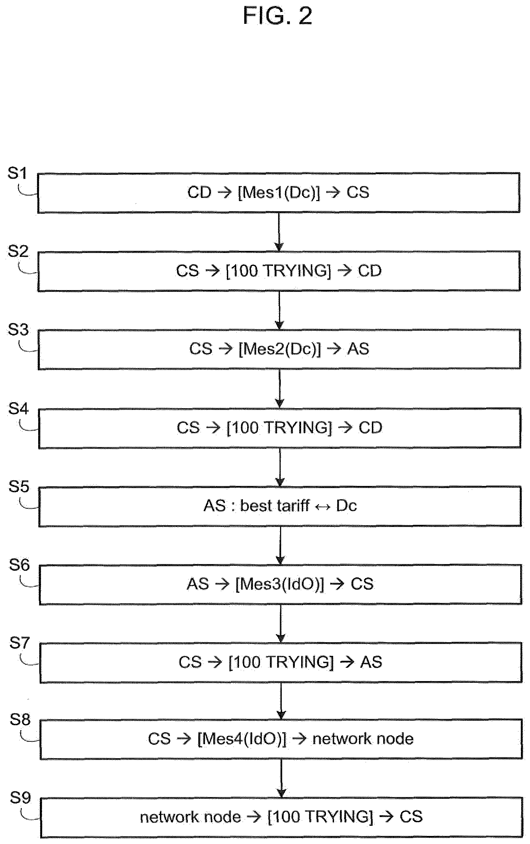

With reference to FIG. 2, a method for the management of duration based call routing according to one embodiment of the invention comprises steps S1 to S9 executed within the communication system.

The method is described below with reference to a telecommunication network TN connected to an IMS network as an example.

In step S1, the communication device CD establishes a communication within the network TN, for example with a media server. The communication device CD transmits a first message Mes1, such as a communication session initiation message, to the call server CS. The first message is, for example, an "INVITE" message, and particularly contains an identifier of the type of communication requested by the user, which corresponds, for example, to an audio session or a video session. The call server CS identifies the user's profile and the type of service related to the communication.

The INVITE message is the first SIP message that a caller sends to the recipient in order to establish a call. The INVITE message comprises in particular the Request-URI (R-URI) and an expected duration Dc of communication.

The first message comprises also a type of communication, for example included in a Session Description Protocol (SDP) message attached to the first message. For instance, the communication could be an audio communication, a video communication or a data communication.

The expected duration Dc of communication can be provided by the user of the communication device CD before the establishment of the communication.

In one variant, the expected duration Dc of communication is predefined by an administrator managing a set of communication devices CD.

In step S2, the call server CS acknowledges reception by sending a SIP message 100 TRYING to the communication device CD.

In step S3, the call server CS triggers the application server AS with the sending of a second message Mes2 similar to the first message Mes1, containing also the expected duration Dc of communication and the type of communication.

In step S4, the application server AS acknowledges reception by sending a SIP message 100 TRYING to the call server CS.

In step S5, the application server AS checks supplementary services applied to the subscriber and recognizes a carrier pre-selection associated with the user for the type of communication indicated in the second message Mes2.

The application server AS extracts the expected duration Dc of communication from the second message Mes2 and identifies a best tariff from the carrier pre-selection corresponding to the expected duration Dc of communication.

The application server AS selects the operator offering the best tariff.

In step S6, the application server AS sends a third message Mes3 to the call server CS, the third message comprising an identifier IdO of the selected operator.

In step S7, the call server CS acknowledges reception by sending a SIP message 100 TRYING to the application server AS.

In step S8, the call server CS sends a fourth message Mes4 to a network node of the selected operator, the fourth request comprising the identifier IdO of the selected operator.

By sending the fourth message Mes4, the call server routes the session related to the current communication to the network of the selected operator.

In step S9, the network node of the selected operator acknowledges reception by sending a SIP message 100 TRYING to the call server CS.

Optionally, if the duration of the communication exceeds the expected duration Dc of communication, the application server AS terminates the communication. This option can be set initially by the user of the communication device or by an administrator of a set of communication devices.

The invention described here relates to a method and a server for the management of duration based call routing. According to one implementation of the invention, the steps of the invention are determined by the instructions of computer programs incorporated into the server. The programs comprise program instructions which, when said programs are loaded and executed within the server and network element respectively, carry out the steps of the inventive method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the inventive method.

## Claims

1. A method for routing a communication associated with a communication device (CD) within a telecommunications network (TN) based on the Internet protocol Multimedia Subsystem, IMS, architecture, comprising the following steps in an application server (AS) included within the telecommunications network:
receiving (S3) a Session Initiation Protocol, SIP, message (Mes2) from the communication device (CD), the SIP message (Mes2) comprising a type of communication and an expected duration (Dc) of communication,
identifying (S5) an operator offering the lowest tariff from a carrier pre-selection for said type of communication, depending on said expected duration (Dc) of communication,
sending (S6) another Session Initiation Protocol, SIP, message (Mes3) comprising an identifier (IdO) of the identified operator to a call server (CS) in order to route the communication associated with the communication device (CD) toward the network of the identified operator.

2. A method according to claim 1, whereby the carrier pre-selection distinguishes different operators offering different tariffs depending on different communication duration slices.

3. A method according to claim 1 or 2, whereby the carrier pre-selection is updated regularly depending on the time of the day.

4. A method according to any of the claim 1 to 3, whereby the application server terminates the communication if the duration of the communication exceeds the expected duration (Dc) of communication.

5. A method according to any of the claim 1 to 4, whereby the expected duration (Dc) of communication is provided by the user of the communication device (CD).

6. A method according to any of the claim 1 to 4, whereby the expected duration (Dc) of communication is predefined by an administrator managing a set of communication devices (CD).

7. An application server for routing a communication associated with a communication device (CD) within a telecommunications network (TN) based on the Internet protocol Multimedia Subsystem, IMS, architecture, the application server being configured to:
receive a Session Initiation Protocol, SIP, message (Mes2) from the communication device (CD), the SIP message (Mes2) comprising a type of communication and an expected duration (Dc) of communication,
identify an operator offering the lowest tariff from a carrier pre-selection for said type of communication, depending on said expected duration (Dc) of communication,
send another Session Initiation Protocol, SIP, message (Mes3) comprising an identifier (IdO) of the identified operator to a call server (CS) in order to route the communication associated with the communication device (CD) toward the network of the identified operator.

8. A computer program capable of being implemented within an application server (AS) for routing a communication associated with a communication device (CD) within a telecommunications network (TN) based on the Internet protocol Multimedia Subsystem, IMS, architecture, said program comprising instructions which, when the program is loaded and executed within said application server, carry out the following steps:
receiving (S3) a Session Initiation Protocol, SIP, message (Mes2) from the communication device (CD), the SIP message (Mes2) comprising a type of communication and an expected duration (Dc) of communication,
identifying (S5) an operator offering the lowest tariff from a carrier pre-selection for said type of communication, depending on said expected duration (Dc) of communication,
sending (S6) another Session Initiation Protocol, SIP, message (Mes3) comprising an identifier (IdO) of the identified operator to a call server (CS) in order to route the communication associated with the communication device (CD) toward the network of the identified operator.

## Patentansprüche

1. Verfahren zum Umleiten einer Kommunikation, die mit einem Kommunikationsgerät (CD) innerhalb eines Telekommunikationsnetzwerks (TN) verbunden ist, auf Grundlage einer IMS-Architektur (Internet Protocol Multimedia Subsystem), umfassend die folgenden Schritte in einem Anwendungsserver (AS), der eingeschlossen ist innerhalb des Telekommunikationsnetzwerks:
Empfangen (S3) einer SIP-Nachricht (Session Initiation Protocol) (Mes2) von dem Kommunikationsgerät (CD), wobei die SIP-Nachricht (Mes2) einen Kommunikationstypen und eine erwartete Dauer (Dc) der Kommunikation umfasst,
Identifizieren (S5) eines Betreibers, der den niedrigsten Tarif aus einer Träger-Vorauswahl für besagten Kommunikationstypen anbietet, abhängig von besagter erwarteter Dauer (Dc) der Kommunikation,
Senden (S6) einer anderen SIP-Nachricht (Session Initiation Protocol) (Mes3), umfassend eine Kennung (IdO) des identifizierten Betreibers an einen Call-Server (CS), um die Kommunikation, die mit dem Kommunikationsgerät (CD) verbunden ist, auf das Netzwerk des identifizierten Betreibers umzuleiten.

2. Verfahren nach Anspruch 1, wobei der Träger-Vorauswahl verschiedene Betreiber unterscheidet, die unterschiedliche Tarife anbieten in Abhängigkeit verschiedener Kommunikationsdauern.

3. Verfahren nach Anspruch 1 oder 2, wobei die Träger-Vorauswahl regelmäßig aktualisiert wird in Abhängigkeit der Tageszeit.

4. Verfahren nach einem beliebigen der Ansprüche 1 bis 3, wobei der Anwendungsserver die Kommunikation beendet, wenn die Dauer der Kommunikation die erwartete Dauer (Dc) der Kommunikation überschreitet.

5. Verfahren nach einem beliebigen der Ansprüche 1 bis 4, wobei die erwartete Dauer (Dc) der Kommunikation von dem Benutzer des Kommunikationsgeräts (CD) bereitgestellt wird.

6. Verfahren nach einem beliebigen der Ansprüche 1 bis 4, wobei die erwartete Dauer (Dc) der Kommunikation von einem Verwalter vordefiniert wird, der einen Satz von Kommunikationsgeräten (CD) verwaltet.

7. Anwendungsserver zum Umleiten einer Kommunikation, die mit einem Kommunikationsgerät (CD) innerhalb eines Telekommunikationsnetzwerks (TN) verbunden ist, auf Grundlage der IMS-Architektur (Internet Protocol Multimedia Subsystem), wobei der Anwendungsserver konfiguriert ist zum:
Empfangen einer SIP-Nachricht (Session Initiation Protocol) (Mes2) von dem Kommunikationsgerät (CD), wobei die SIP-Nachricht (Mes2) einen Kommunikationstypen und eine erwartete Dauer (Dc) der Kommunikation umfasst,
Identifizieren eines Betreibers, der den niedrigsten Tarif aus einer Träger-Vorauswahl für besagten Kommunikationstypen anbietet, abhängig von besagter erwarteter Dauer (Dc) der Kommunikation,
Senden einer anderen SIP-Nachricht (Session Initiation Protocol) (Mes3), umfassend eine Kennung (IdO) des identifizierten Betreibers an einen Call-Server (CS), um die Kommunikation, die mit dem Kommunikationsgerät (CD) verbunden ist, auf das Netzwerk des identifizierten Betreibers umzuleiten.

8. Computerprogramm, das in der Lage ist, in einen Anwendungsserver (AS) implementiert zu werden zum Umleiten einer Kommunikation, die mit einem Kommunikationsgerät (CD) innerhalb eines Telekommunikationsnetzwerks (TN) verbunden ist, auf Grundlage einer IMS-Architektur (Internet Protocol Multimedia Subsystem), wobei besagtes Programm Befehle umfasst, die, wenn das Programm innerhalb besagten Anwendungsservers geladen und ausgeführt wird, die folgenden Schritte ausführt:
Empfangen (S3) einer SIP-Nachricht (Session Initiation Protocol) (Mes2) von dem Kommunikationsgerät (CD), wobei die SIP-Nachricht (Mes2) einen Kommunikationstypen und eine erwartete Dauer (Dc) der Kommunikation umfasst,
Identifizieren (S5) eines Betreibers, der den niedrigsten Tarif aus einer Träger-Vorauswahl für besagten Kommunikationstypen anbietet, abhängig von besagter erwarteter Dauer (Dc) der Kommunikation,
Senden (S6) einer weiteren SIP-Nachricht (Session Initiation Protocol) (Mes3), umfassend eine Kennung (IdO) des identifizierten Betreibers an einen Call-Server (CS), um die Kommunikation, die mit dem Kommunikationsgerät (CD) verbunden ist, auf das Netzwerk des identifizierten Betreibers umzuleiten.

## Revendications

1. Procédé d'acheminement de communication associée à un dispositif de communication (CD) au sein d'un réseau de télécommunications (TN) basé sur l'architecture de sous-système multimédia à protocole Internet, IMS, comprenant les étapes suivantes dans un serveur d'application (AS) inclus dans le réseau de télécommunications :
recevoir (S3) un message (Mes2) de protocole d'initialisation de session, SIP, en provenance du dispositif de communication (CD), le message SIP (Mes2) contenant un type de communication et une durée de communication prévue (Dc),
identifier (S5) un opérateur proposant le tarif le plus bas dans une présélection d'opérateurs pour ledit type de communication, en fonction de ladite durée de communication prévue (Dc),
envoyer (S6) un autre message (Mes3) de protocole d'initialisation de session, SIP, contenant un identifiant (IdO) de l'opérateur identifié à un serveur d'appel (CS) afin d'acheminer la communication associée au dispositif de communication (CD) vers le réseau de l'opérateur identifié.

2. Procédé selon la revendication 1, dans lequel la présélection d'opérateur distingue différents opérateurs proposant des tarifs différents en fonction de tranches de durée de communication différentes.

3. Procédé selon la revendication 1 ou 2, dans lequel la présélection d'opérateur est actualisée régulièrement en fonction de l'heure du jour.

4. Procédé selon l'une quelconque des revendications 1 à 3, dans lequel le serveur d'application met fin à la communication si la durée de la communication dépasse la durée de communication prévue (Dc).

5. Procédé selon l'une quelconque des revendications 1 à 4, dans lequel la durée de communication prévue (Dc) est fournie par l'utilisateur du dispositif de communication (CD).

6. Procédé selon l'une quelconque des revendications 1 à 4, dans lequel la durée de communication prévue (Dc) est prédéfinie par un administrateur gérant un ensemble de dispositifs de communication (CD).

7. Serveur d'application destiné à acheminer une communication associée à un dispositif de communication (CD) au sein d'un réseau de télécommunications (TN) basé sur l'architecture de sous-système multimédia à protocole Internet, IMS, le serveur d'application étant configuré pour :
recevoir un message (Mes2) de protocole d'initialisation de session, SIP, en provenance du dispositif de communication (CD), le message SIP (Mes2) contenant un type de communication et une durée de communication prévue (Dc),
identifier un opérateur proposant le tarif le plus bas dans une présélection d'opérateurs pour ledit type de communication, en fonction de ladite durée de communication prévue (Dc),
envoyer un autre message (Mes3) de protocole d'initialisation de session, SIP, contenant un identifiant (IdO) de l'opérateur identifié à un serveur d'appel (CS) afin d'acheminer la communication associée au dispositif de communication (CD) vers le réseau de l'opérateur identifié.

8. Programme informatique pouvant être implémenté dans un serveur d'application (AS) pour acheminer une communication associée à un dispositif de communication (CD) au sein d'un réseau de télécommunications (TN) basé sur l'architecture de sous-système multimédia à protocole Internet, IMS, ledit programme contenant des instructions qui, lorsque le programme est chargé et exécuté dans ledit serveur d'application, réalise les étapes suivantes :
recevoir (S3) un message (Mes2) de protocole d'initialisation de session, SIP, en provenance du dispositif de communication (CD), le message SIP (Mes2) contenant un type de communication et une durée de communication prévue (Dc),
identifier (S5) un opérateur proposant le tarif le plus bas dans une présélection d'opérateurs pour ledit type de communication, en fonction de ladite durée de communication prévue (Dc),
envoyer (S6) un autre message (Mes3) de protocole d'initialisation de session, SIP, contenant un identifiant (IdO) de l'opérateur identifié à un serveur d'appel (CS) afin d'acheminer la communication associée au dispositif de communication (CD) vers le réseau de l'opérateur identifié.
